(19) **Europäisches Patentamt / European Patent Office / Office européen des brevets**

(11) **EP 4 020 012 B1**

(12) **EUROPEAN PATENT SPECIFICATION**

(45) Date of publication and mention
of the grant of the patent:
**18.02.2026 Bulletin 2026/08**

(21) Application number: **20216287.1**

(22) Date of filing: **22.12.2020**

(51) International Patent Classification (IPC):
**G01S 13/88** *(2006.01)*   **G01S 7/28** *(2006.01)*
**G01S 13/10** *(2006.01)*   **B60G 9/02** *(2006.01)*

(52) Cooperative Patent Classification (CPC):
**G01S 13/882; B60G 9/00; B60G 17/019;**
**G01B 15/00; G01S 7/28; G01S 13/10; G01S 13/88;**
B60G 2200/30; B60G 2400/252; B60G 2400/52;
B60G 2400/60; B60G 2400/823; B60G 2401/174;
G01B 7/315

(54) **CHASSIS HEIGHT MEASUREMENT SYSTEM FOR A VEHICLE**

FAHRWERKHÖHENMESSSYSTEM FÜR EINEM KRAFTFAHRZEUG

SYSTÈME DE MESURE DE HAUTEUR DE CHÂSSIS D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.06.2022 Bulletin 2022/26**

(73) Proprietor: **ZF CV Systems Europe BV
1170 Brussels (BE)**

(72) Inventors:
 • **BERTOLINA, Guillermo
  1150 Brussels (BE)**
 • **BRAMMER, Christian
  29303 Bergen (DE)**
 • **BROLL, Niklas
  30952 Ronnenberg (DE)**
 • **DE ROCHAMBEAU, Pierre
  1060 Brussels (BE)**
 • **FEYERABEND, Konrad
  30625 Hannover (DE)**
 • **TOPIC, Oliver
  30459 Hannover (DE)**
 • **VON WECHGELN, Ina
  30559 Hannover (DE)**
 • **WOLF, Thomas
  30890 Barsinghausen (DE)**

(74) Representative: **Ohlendorf, Henrike
  ZF CV Systems Hannover GmbH
  Am Lindener Hafen 21
  30453 Hannover (DE)**

(56) References cited:
  DE-A1- 10 255 438    DE-A1- 102005 008 403
  DE-A1- 102009 052 717    DE-A1- 102009 053 114
  KR-A- 20080 043 949    US-A- 5 696 515

## Description

The invention relates to a chassis height measurement system for a vehicle, in a particular commercial vehicle or a passenger vehicle, with an axle suspended by a suspension system, in particular an air suspension system, comprising a height sensor, adapted to provide a road distance signal, which represents a distance between a road surface and a chassis of the vehicle, wherein the height sensor is a radar sensor which is fixed to the chassis, and with a field of view defined by a measurement aperture.

Chassis height measurement systems are generally well known. Conventional systems for measuring the height of a chassis of a vehicle and normally based on a hall or inductive angle sensor mounted on a chassis, wherein the angle sensor is connected to an axle of the vehicle by means of a mechanical lever. Such mechanical solution normally involves relatively high costs and installation effort. Also, such mechanical height measurement systems, and in particular the mechanical lever, are prone to being damaged during usage.

Due to these reasons, other solutions for determining the chassis height have been proposed. In particular contactless solutions, for example based on ultrasonic or infrared sensors have been proposed. Such sensors, however, are sensitive to disturbances from environmental influences such as dirt or water.

Radar sensors are less sensitive to such disturbances.

US 5,696,515 A proposes a system and method for determining absolute vehicle height and ground speed, wherein a millimeter wave radar system for determining selected boundary distances is implemented based upon a generation of a modulated millimeter wave signal which is envelope detected and thereafter phase detected to determine the selected boundary distance on a continuous real-time basis.

KR20080043949 discloses a radar-based height measuring sensor which is mounted on the lower portion of a vehicle body to measure the ground clearance between a vehicle body and a road surface.

DE 10 2009 053 114 A1 discloses a system to determine a distance between a vehicle suspension assembly and a ground. The vehicle suspension assembly comprises an element coupled to a transceiver to emit an interrogation signal towards the ground and to receive a reflection of the interrogation signal from the ground. A processor coupled to the transceiver determines the distance between the vehicle suspension assembly and the ground.

DE 10 2009 052 7171 A1 discloses a system to determine a distance between a first portion of a vehicle suspension assembly and a second portion of the vehicle suspension assembly. The first portion of the vehicle suspension assembly is coupled to a transceiver to emit an interrogation signal towards the second portion of the vehicle suspension assembly and to receive a reflection of the interrogation signal from the second portion of the vehicle suspension assembly. A processor coupled to the transceiver determines the distance between the first and second portions of the vehicle suspension assembly.

Despite these generally favorable approaches of measuring the chassis height by means of a radar sensor, chassis height measurement systems can still be improved. Chassis height measurement systems should be improved with respect to their functionality and reliability.

Accordingly, it is an object of the invention to provide a chassis height measurement system with increased reliability and a greater functionality. In accordance with the invention to solve the object, a chassis height measurement system is proposed according to claim 1.

A chassis height measurement system is proposed for a vehicle, in particular a commercial vehicle or a passenger vehicle, with an axle suspended by a suspension system, in particular an air suspension system, comprising a height sensor, adapted to provide a road distance signal, which represents a distance between a road surface and a chassis of the vehicle, wherein the height sensor is a radar sensor which is fixed to the chassis, and with a field of view defined by a measurement aperture.

In accordance with the invention, it is proposed that the radar sensor is arranged such that an axle reference object, in particular the axle, is within the field of view, wherein the radar sensor is adapted to provide an axle distance signal, which represents a distance between the chassis and the axle reference object, wherein the radar sensor is a single radar sensor providing the road distance signal and the axle distance signal.

The invention is based on the idea that applying a radar sensor for measuring the chassis height has the advantage of a smaller sensitivity to disturbances that can occur during the operation of a vehicle, in particular under harsh roadside conditions.

The invention includes the finding that yet still the reliability and functionality of such radar sensor still can be improved. By arranging the radar sensor such that the axle reference object, in particular the axle, is within the field of view, an axle distance signal can be generated as a second distance value in addition to the road distance signal. With such additional axle distance signal available, a variety of additional functions can be provided based on this additional information. For example, the proper function of the suspension system, in particular the air suspension system, of the vehicle, in particular commercial vehicle or passenger vehicle, can be monitored.

By providing the road distance signal and the axle distance signal with one radar sensor, the chassis height can be determined more reliably, since the functioning of the radar sensor can be verified even if one distance signal is absent, because of the availability of the other distance signal, in particular the axle distance signal.

For example, when crossing a floor grid of a bridge or any other unfavorable road surface condition - which has the consequence of the road distance signal not being available due to a lack of reflection of the radar signal -the axle distance signal will still be available, generated by the reflection of the radar signal at the axle reference object, indicating that the radar sensor is still functioning. Therefore, the reliability of the radar sensor is enhanced through such continuous availability of a second, axle distance signal generated via the reflection at the axle reference object.

The axle reference object is an object that reflects electromagnetic waves emitted by the radar sensor back to the radar sensor. The axle reference object represents the height of the axle of the vehicle. The axle reference object can be formed by a part of the actual axle, in particular a part of the axle surface oriented towards the radar sensor. The axle reference object can also be formed by the axle. In other embodiments, the axle reference object can be formed as a separate object mounted to the axle and extending into the field of view of the radar sensor, in particular from outside of the field of view. Especially if the axle reference object is the axle or a part of the axle, but also if the axle reference object is a separate object that has some spatial extension, especially in the longitudinal direction of the axle, it is advantageous that even if part of the axle reference object gets defaced or obscured, e. g. because dirt or dust adheres to it or if ice forms on it or adheres to it in another way, especially if thrown up from the road surface, a part of the axle reference object can still be used that is not defaced or obscured. In this way, the chassis height measurement system is robust against everyday occurrences of dust, dirt, ice or other interfering substances and even localized damages, e. g. dents, that might occur on the axle reference object due to it being arranged in an unprotected position close to the road surface. A commercial vehicle is in particular a truck or a trailer.

According to the invention, a vehicle is proposed, comprising at least one axle suspended by a suspension system, in particular an air suspension system, and a chassis height measurement system according to the first aspect of the invention. In particular, the vehicle is a commercial vehicle such as a truck or a trailer. In other embodiments, the vehicle can be a passenger vehicle, in particular a car such as a sports utility vehicle (SUV), a sedan, or the like passenger vehicle. Nevertheless, the concept of the invention is not restricted to be applied to a specific kind of vehicle but can be applied also to vehicles of other kind than the commercial and passenger vehicles mentioned herein. Vehicles of other kind may in particular include off-road vehicles or heavy duty vehicles. Also the concept of the invention may be applied to a railway vehicle.

According to the invention, a method of operating a chassis height measurement system according to claim 1 is proposed, comprising the steps: performing a radar measurement by means of the radar sensor, and providing a road distance signal and an axle distance signal, in particular within one measurement cycle of the radar sensor.

Further developments of the invention can be found in the dependent claims and show particular advantageous possibilities to realize the above-described concept in light of the object of the invention and regarding further advantages. Unless noted otherwise, numbers in the text, and in particular quantities and the expressions "one" or "a", can imply that reference is made to exactly that number as well as an amount greater than that number. In particular, the expressions "one" or "a", in the context of quantities, can also be understood as "at least".

In a further embodiment of the invention, the radar sensor is adapted to provide the road distance signal and the axle distance signal within one measurement cycle of the radar sensor. In such embodiment, both distance signals, the road distance signal and the axle distance signal, are both available in each measurement cycle. One measurement cycle in particular comprises the emitting and subsequent receiving of one or more electromagnetic waves by the radar sensor. In such embodiment, the time needed for proving both distance signals, the road distance signal and the axle distance signal, can be decreased, which can advantageously improve the application where reaction time is critical, such as security relevant applications, in particular the above described verification of the functioning of the radar sensor. In particular, the radar sensor is adapted to repeat a measurement cycle, in particular within specified intervals or continuously.

In a further embodiment of the invention, the axle reference object, in particular the axle, comprises a radar reflector, in particular a passive radar reflector, oriented towards the radar sensor. Such radar reflector advantageously increases the reflectivity of the axle reference object, thereby increasing the reliability of the acquisition of the axle distance signal. Therefore, a radar reflector is particularly useful when using the axle distance signal for checking the plausibility of the distance signals acquired by the radar sensor measurement.

In a further embodiment of the invention, the radar sensor is a high frequency radar sensor, in particular with a signal frequency between 50 GHz and 200 GHz. Frequencies in this range have proven to be suitable for the chassis height measurement application with a relatively small measurement range - with distances regularly smaller than one meter - and relatively high accuracy. In other embodiments, the signal frequency of the radar sensor can range between 50 GHz and 100 GHz, or between 60 GHz and 78 GHz.

In a further embodiment of the invention, the measurement aperture has an aperture angle between 10° and 25°, in particular between 15 and 20°. A larger aperture angle will result in a larger field of view of the radar sensor.

In a further embodiment of the invention, the radar sensor comprises a measurement direction directed towards the road surface and the radar sensor is arranged in such a way that the measurement direction is perpendicular to the road surface.

In a further embodiment of the invention, the radar sensor is arranged relative with an angular offset to the axle reference object in, wherein the angular offset is between 5° and 10°. Such angular offset will allow for sufficient clearance along the measurement direction (at 0°) in order to properly measure the road distance signal.

It is suggested in a further embodiment of the invention for the chassis height measurement system to comprise a distance calculation module, which is adapted to determine the road distance signal from a first distance value at a first peak of a signal amplitude and the axle distance signal from a second distance value at a second peak of the signal amplitude. Such distance calculation module is particularly a part of a signal processing module. In particular, the first peak of the signal amplitude is the highest peak of the signal amplitude and the second peak of the signal amplitude is the second highest peak of the signal amplitude. In particular, the calculation of the road distance signal and the axle distance signal will be performed at every measurement cycle of the radar sensor. The distance calculation module can comprise a mapping function and/or a lookup table and/or a direct lookup table. The distance calculation module can be adapted to transfer a measured axle distance signal into the axle distance signal, in particular by means of a direct lookup table.

It is suggested in a further embodiment of the invention for the chassis height measurement system to comprise a road surface characteristic determination module, which is adapted to determine a road surface characteristic based on a presence of a road distance signal and/or a change of the road distance signal and/or the axle distance signal over time and/or a comparison of the road distance signal and the axle distance signal and/or a comparison of a rate of change of the road distance signal and the axle distance signal and/or an intensity of a signal measured by the radar sensor. The road surface characteristic may e. g. be a road surface smoothness, a road surface wetness or the presence of a bump or a pothole in the road surface.

For example, either a rough surface or a wet surface may cause a higher intensity measured by the radar sensor for the road distance signal; i. e. the first peak of the signal amplitude may be relatively higher compared to a moderately rough surface or a dry surface. For a very smooth or flooded surface the first peak of the signal amplitude may be very low or absent, so that it is possible that no road distance signal is detected in this case.

Bumps or potholes in the road surface may cause either the road distance signal or the axle distance signal to change in a certain way. For example, if a wheel of the vehicle drives over a bump, the road distance signal may remain the same while, due to the axle being temporarily tilted, the axle distance signal may decrease in a characteristic pattern and increase again when the bump has been passed. The rate of the decrease and corresponding increase of the axle distance signal can serve as an indicator to the shape of the bump. If, on the other hand, a bump merely passes under the vehicle without touching its wheel, the axle main remain stable, therefore leaving the axle distance signal unchanged, while the road distance signal temporarily decreases and increases again when the bump has been passed. The rate of the decrease and corresponding increase of the road distance signal can serve as an indicator to the shape of the bump. The same mechanisms in the reverse occur for a pothole in the road surface.

It is suggested in a further embodiment of the invention for the road surface characteristic to be determined aided by external data. This may be advantageous because e. g. the implications of a rough or wet surface on the measurements made in the chassis height measurement system may be similar or the same as described above. It is also possible that several factors influence the road surface condition at once. For example, the road surface may at once be rough and wet. Therefore, a distinction between different road surface characteristics measured may be aided by additionally considering external data. In the example given, the distinction may be aided by considering weather data. If it is known to be raining constantly, a change in the intensity is probably due to the road smoothness changing. In particular the external data may be historical data or map data, which may e. g. indicate a type of road, possibly allowing distinction between a main road, which has a higher probability of having a smooth surface, and a minor road, which has a higher probability of having a rough surface, and which may be combined with geographical position data of the vehicle provided e. g. by a GPS sensor or other geopositioning sensor of the vehicle. The external data may also be weather data including weather forecasts, current weather data as provided by weather stations external to the vehicle or weather data gathered on the vehicle, e. g. by a rain sensor. The external data may also be vehicle condition data that might e. g. be retrieved from a braking system or ADAS sensors or road condition data that might e. g. be retrieved by a road condition sensor on the vehicle or ADAS sensors.

It is suggested in a further embodiment of the invention for the road surface characteristic to be uploaded to a web-based data storage. The web-based data storage may in particular be a data lake. Before, during or after uploading, the road surface characteristic may be combined with a geographical position of the vehicle. In the web-based data storage, it is possible for the data to be combined with other data sources. It is, for example, possible that road surface characteristics derived by one vehicle are stored in the web-based data storage and are subsequently provided to another vehicle, where they may be used on their own or where they may be used to aid determination of a road surface characteristic in that vehicle. It is therefore also possible for the external data to be road surface characteristic data that was previously determined by another vehicle. In this latter case it is also possible that due to road surface characteristic data provided by several vehicles the road surface characteristic data stored in the web-based data storage is revised and further specified.

It is suggested in a further embodiment of the invention for the chassis height measurement system to comprise a function check module adapted to check whether at least one distance signal of the road distance signal and the axle distance signal is available. The function check module can be adapted to output a function warning if none of the two distance signals is available. Such function check module considers the case that one distance signal, in particular the road distance signal, might be absent temporarily due to unfavorable road surface conditions. In such case, the availability of the second distance signal, in particular the axle distance signal, signifies that the radar sensor is still functioning.

It is suggested in a further embodiment of the invention for the chassis height measurement system to comprise a plausibility check module, which is adapted to check the plausibility of the road distance signal and/or the axle distance signal, in particular by comparing the road distance signal to a first plausibility corridor and the axle distance signal to a second plausibility corridor, or by comparing an offset between the road distance signal and the axle distance signal to a reference offset. Such plausibility check module helps to identify systematic errors or other malfunctions of the radar sensor. In particular, the plausibility check module can help to detect the presence of additional objects in the field of view, causing additional peaks in the radar signal that lead to an incorrect calculation of the distance signal.

It is suggested in a further embodiment of the invention for the chassis height measurement system to comprise a functional module, wherein the functional module is:

- a tolerance corridor module adapted to determine whether the road distance signal is within a first tolerance corridor and/or the axle distance signal is within a second tolerance corridor, and/or
- a clearance calculation module adapted to calculate an axle clearance signal based on the road distance signal and the axle distance signal, and/or
- a weight calculation module adapted to calculate a weight or a change in weight based on the road distance signal and/or the axle distance signal, and/or
- an object detection module adapted to detect objects on the axle reference object based on the road distance signal and the axle distance signal, and/or
- a tire pressure module adapted to calculate a tire pressure of at least one tire or an average tire pressure, based on the road distance signal and the axle distance signal, and/or
- a communication module adapted to provide an output signal for a vehicle bus system and/or for the suspension system, wherein the output signal comprises the road distance signal and/or the axle distance signal.

In a further embodiment of the vehicle according to the invention, the vehicle comprises a vehicle bus system, in particular a CAN bus system, wherein the chassis height measurement system is adapted to provide an output signal comprising the road distance signal and/or the axle distance signal to the vehicle bus system. In particular, the output signal comprises the axle distance signal serves as an input for the suspension system of the vehicle in such a way that a set chassis height to be achieved by the suspension system can be measured by the chassis height measurement system. In such context, the chassis height measurement system serves as a part of a control loop. In other embodiments of the vehicle according to the invention, the vehicle alternatively or additionally comprises a signal line, adapted to transfer the output signal comprising the road distance signal and/or the axle distance signal, in particular to a vehicle control unit.

In embodiments, an output signal, in particular a road distance signal and/or an axle distance signal, can be in the form of a pulse-width modulated (PWM) signal. In particular, the radar sensor and/or the signal processing module and/or a distance calculation module can be adapted to provide a pulse-width modulated (PWM) signal.

In a further embodiment of the method according to the invention, the method further comprises the steps:

- determining whether a road distance signal is present and/or
- monitoring a change of the road distance signal and/or the axle distance signal over time and/or
- comparing the road distance signal and the axle distance signal and/or
- comparing a rate of change of the road distance signal and a rate of change of the axle distance signal and/or
- determining an intensity of a signal measured by the radar sensor and
- determining a road surface characteristic based on the presence or absence of the road distance signal and/or the change of the road distance signal and/or the axle distance signal over time and/or the comparison of the road distance signal and the axle distance signal and/or on the comparison of the rate of change of the road distance signal and the rate of change of the axle distance signal and/or on the intensity of a signal measured by the radar sensor,
- where determining the road surface characteristic is optionally aided by external data such as historical data, map data, weather data, vehicle condition data or road condition data.

In a further embodiment of the method according to the invention, the method further comprises the step of uploading the road surface characteristic to a web-based data storage, in particular a data lake.

In a further embodiment of the method according to the invention, the method further comprises the steps:

- determining a first tolerance corridor for the road distance signal and/or a second tolerance corridor for the axle distance signal, and
- comparing whether the road distance signal is within the first tolerance corridor and/or the axle distance signal is within the second tolerance corridor. In particular, the method can further comprise the step of prompting a warning signal if the road distance signal is not within the first tolerance corridor and/or the axle distance signal is not within the second tolerance corridor.

In a further embodiment of the method according to the invention, the method further comprises the steps:

- calculating an axle clearance signal based on the road distance signal and the axle distance signal, and/or
- calculating a weight or a change in weight based on the road distance signal and/or the axle distance signal, in particular during a non-moving state of the vehicle, and/or
- detecting the presence of foreign objects, in particular dirt, ice or debris, on the axle reference object, in particular an axle, based on the road distance signal and the axle distance signal, and/or:
- calculating a tire pressure of at least one tire or an average tire pressure, based on the road distance signal and the axle distance signal, and/or
- generating an output signal for a vehicle bus system, in particular for a CAN bus system, and/or for a suspension system of the vehicle, wherein the output signal comprises the road distance signal and/or the axle distance signal. In other embodiments, the step "calculating a weight or a change in weight based on the road distance signal and/or the axle distance signal" can additionally or alternatively be performed in a moving state of the vehicle.

In a further embodiment of the method according to the invention, the method further comprises a calibration procedure, comprising the determination of at least one road distance reference value for the road distance signal and/or one axle distance reference value for the axle distance signal. In particular, the calibration step can comprise the establishing of a direct lookup table describing a relationship between a measured axle distance signal and an axle distance signal.

In one embodiment, the calibration procedure comprises a positioning step, a reference measuring step and a correlation step. In the positioning step, the vehicle comprising the chassis height measurement system to be calibrated is positioned on a flat reference surface with a defined tire pressure of the vehicle's tires. In the reference measuring step, a reference value for the road distance signal can then be acquired via the radar sensor under these calibration conditions. With the axle diameter and the axle clearance known or measurable, a reference value for the axle distance signal can be calculated and correlated to the measured axle distance in a correlation step. The sequence of the reference measuring step and the correlation step can be repeated for different vertical positions of the air suspension system of the vehicle in order to generate a direct lookup table.

In another embodiment of the calibration procedure, the axle distance signal is calibrated by a reference axle distance signal measured by the independent measurement system.

In particular, the calibration procedure is performed once before initial operation of an individual vehicle or once for a multitude of vehicles of one vehicle type or once for a multitude of suspension systems of one suspension system type.

The invention will be apparent from and elucidated with reference to the embodiments described hereinafter. The embodiments of the invention are described in the following on the basis of the drawings in comparison with the state of the art, which is also partly illustrated. The drawings are not necessarily intended to represent the embodiments to scale. Drawings are, where useful for explanation, shown in schematized and/or slightly distorted form.

Further advantages, features and details of the invention result from the following description of the illustrated embodiments as well as from the drawings, which show in:

Fig. 1 an illustration of an embodiment of a chassis height measurement system according to the concept of the invention in a schematic side view,

Fig. 2 a schematic rear view of the embodiment shown in Fig. 1,

Fig. 3 a schematic diagram of the signal curve of the radar sensor,

Fig. 4 an illustration of functional modules of the radar sensor,

Fig. 5 an illustration of exemplary statistical calculations on the axle clearance signal.

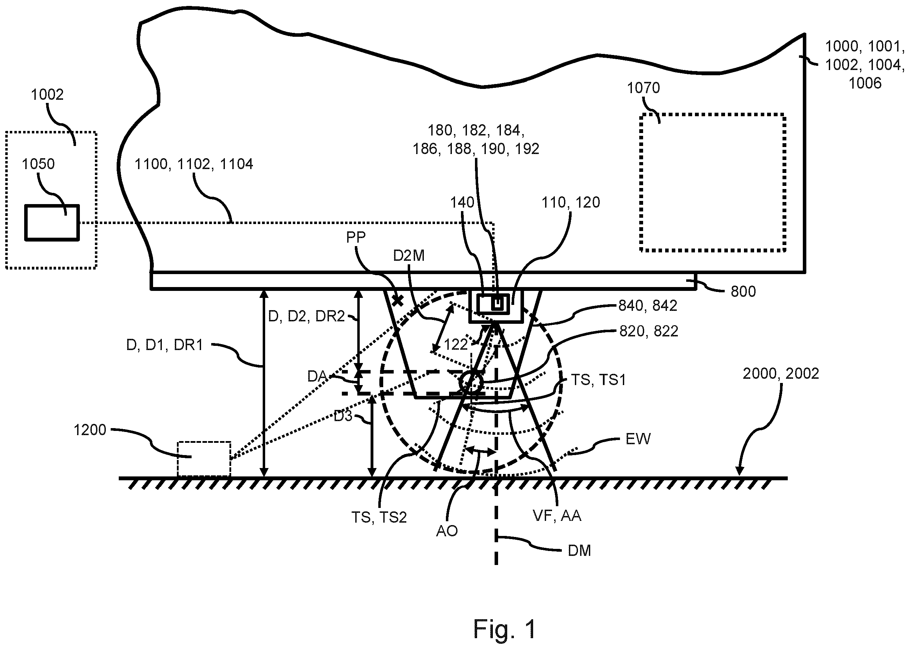

Fig. 1 shows a chassis height measurement system according to the concept of the invention, comprising a height sensor 110 realised as a radar sensor 120.

The radar sensor 120 is fixed, in particular mounted, to a chassis 800 of a vehicle 1000, in particular commercial vehicle 1001, here in form of a trailer 1004. In other embodiments, the chassis height measurement system 100 can be applied in other types of vehicles 1000, in particular passenger vehicles 1006, or other commercial vehicles 1001, such as a truck 1002 or the like. Although herein below with regard to the figures embodiments of the invention are described related to a vehicle 1000 as a commercial vehicle 1001 such as a truck 1002 or a trailer 1004, in other embodiments, the vehicle 1000 can be a passenger vehicle 1006, in particular a car such as a sports utility vehicle (SUV), a sedan, or the like passenger vehicle 1006 as indicated by respective reference signs. Nevertheless, the concept of the invention is not restricted to be applied to a specific kind of vehicle 1000 but can be applied also to vehicles of other kind than the commercial and passenger vehicles 1001, 1006 mentioned herein. Such vehicles of other kind are not shown in the figures explicitly but may in particular include off-road vehicles or heavy duty vehicles. Also, the concept of the invention may be applied to a railway vehicle.

The radar sensor 120 comprises a measurement aperture 122 with an aperture angle AA, which defines a field of view VF of the radar sensor 120. The radar sensor 120 and the measurement aperture 122 are arranged such that a measurement direction DM is directed towards a road surface 2000 below the vehicle 1000, in particular the commercial vehicle 1001 or passenger vehicle 1006. In particular, the measurement direction DM is perpendicular to the road surface 2000.

The field of view VF is shaped such that its cross-section becomes larger distance along the measurement direction DM. In particular, the field of view VF has a conical shape.

According to the concept of the invention, the radar sensor 120 is adapted to provide an axle distance signal D2, which represents the distance between the chassis 800 and an axle reference object 820. In the present case, the axle 822 itself forms the axle reference object 820. In other embodiments, an axle reference object 820 can be formed as a separate object which is mounted to the axle 822 in a fixed manner, thereby representing the height of the axle 820. In axle reference object 820 is a separate object for example is useful, if the axle 820 itself is arranged outside the field of view VF of the radar sensor 120, and therefore the axle reference object 820 needs to extend into the field of view VF.

The radar sensor 120 is arranged relative to the axle reference object 820 with an angular offset AO. This means, that the axle reference object 820 is not arranged below the measurement aperture 122 in the line of the measurement direction DM, but off-centered, namely by the angular offset AO. By arranging the axle reference object 820 with an angular offset AO, the radar sensor 120 has a clear, unobstructed line of sight along the measurement direction DM towards the road surface 2000. The angular offset AO is smaller than the aperture angle AA.

According to the concept of the invention, the chassis height measurement system is adapted to determine and provide a road distance signal D1 and an axle distance signal D2. In particular, the road distance signal D1 describes the vertical distance between the radar sensor 120 or a reference point of the chassis and the road surface 2000. In particular, the axle distance signal D2 describes the vertical distance between the radar sensor 120 or a reference point of the chassis and the axle reference object 820.

The chassis height measurement system 100 comprises a signal processing module 140 adapted to process an acquired radar signal S. The signal processing module 140 can comprise further functional modules 180. The signal processing module 140 is connected to a vehicle control unit 1050 of the vehicle 1000, , in particular of a truck 1002 or of a passenger vehicle 1006. In particular, the signal processing module 140 is connected to the vehicle control unit 1050 by means of a vehicle bus system 1100, in particular a CAN bus system 1102, or, in general, a signal line 1104.

In particular, due to a punctual propagation of the radar signal S from the radar sensor 120, the radar sensor 120 and/or the signal processing module 140 and/or a distance calculation module 138 can be adapted to transfer a measured axle distance signal D2M into the - vertically oriented - axle distance signal D2, in particular via the following relationship

$$D2 = D2M * \cos(AO),$$

wherein the measured axle distance signal D2M in particular describes the direct distance between radar sensor 120 and the axle reference object 820.

In particular during operation of the vehicle 1000, the axle 822 and/or the axle reference object 820 moves along a suspension trajectory TS due to the functioning of the suspension system 840, which causes a change of the angular offset AO in dependence of the position of the axle 822 and/or the axle reference object 820. For example, the suspension trajectory TS can be in the form of a first, vertical suspension trajectory TS1, or - for example in suspension systems 840 where the axle is movably fixed to the chassis 800 via a pivot bearing PP - in the form of a second, circular suspension trajectory TS2.

Therefore, the angular offset AO of the axle 822 and/or the axle reference object 820 varies in dependence of the distance between the chassis 800 and the axle reference object 820, in particular in dependence of the measured axle distance signal D2M. In particular, the angular offset AO is a function of the measured axle distance signal D2M.

The chassis height measurement system 100, in particular the distance calculation module 138 can comprise a mapping function FM, in particular a lookup table TL, adapted to assign an angular offset AO value for each value - or for a range of values - of the measured axle distance signal D2M.

In preferred embodiments, the lookup table TL can be in the form of a direct lookup table TLD, adapted to directly assign a value of the axle distance signal D2 to each value - or to a range of values - of the measured axle distance signal D2M. With such direct lookup table TLD, the calculation effort can be reduced. A direct lookup table TLD therefore provides an axle distance signal D2 value in dependence of an input measured axle distance signal D2M value.

A mapping function FM and/or a lookup table TL and/or a direct lookup table TLD can be determined experimentally in a calibration procedure.

In one embodiment, the calibration procedure comprises a positioning step, a reference measuring step and a correlation step. In the positioning step, the vehicle 1000 comprising the chassis height measurement system 100 to be calibrated is positioned on a flat reference surface 2002 with a defined tire pressure PT of the tires 860 of the vehicle 1000. In the reference measuring step, a road distance reference value DR1 for the road distance signal D1 can then be acquired via the radar sensor 120 under these calibration conditions. With the axle diameter DA and the axle clearance D3 known or measurable, an axle distance reference value DR2 for the axle distance signal D2 can be calculated and correlated to the measured axle distance D2M in a correlation step. The sequence of the reference measuring step and the correlation step can be repeated for different vertical positions of the air suspension system of the vehicle in order to generate a direct lookup table LTD. During a subsequent operation of the vehicle 1000, the direct lookup table LTD is used for providing an axle distance signal D2 based on the measured axle distance D2M. By means of a direct lookup table LTD, an individual suspension trajectory TS of a vehicle 1000 can advantageously be taken into account.

In another embodiment of the calibration procedure, the calibration procedure can comprise the experimental determination of the road distance reference value DR1 for the road distance signal D1 and/or the axle distance reference value DR2 for the axle distance signal D2 by means of an independent measurement system 1200, for example an optical measurement system.

The reference values DR1, DR2 serve as a basis for establishing a relationship between the radar signal S and the signals D1, D2. In particular, a relationship is established between the measured axle distance signal D2M and the axle distance signal D2 based on the axle distance reference value DR2, wherein the axle distance reference value DR2 serves as the basis for calibrating the axle distance signal D2. Such relationship between the measured axle distance signal D2M and the axle distance reference value DR2 can in particular be recorded in a direct lookup table TLD.

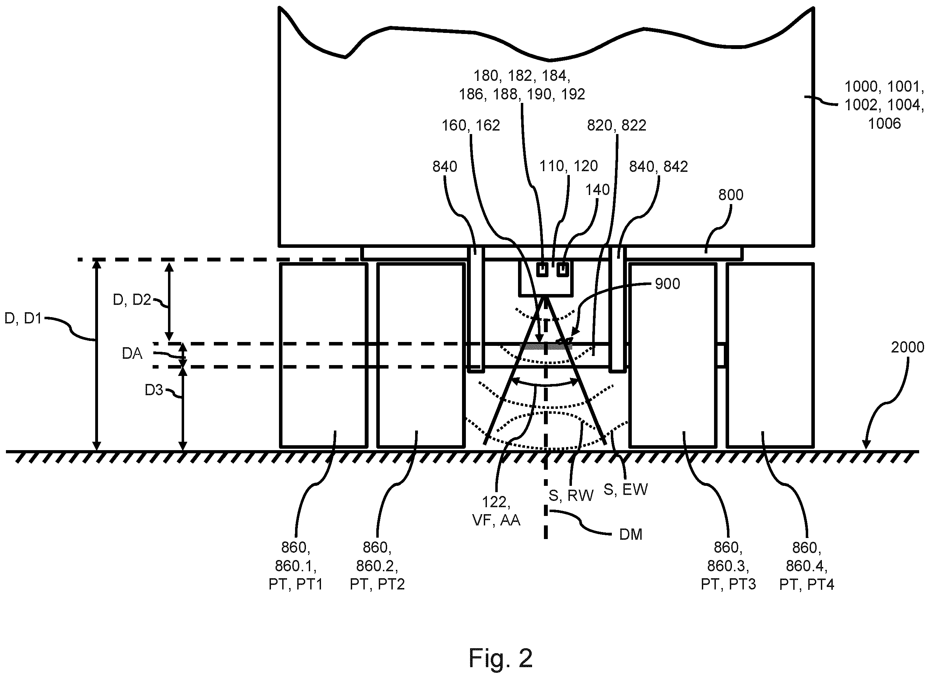

Fig. 2 shows the embodiments shown in Fig. 1 in a rear view. The rear of the trailer 1004 is visible with its axle 822 and four tires 860. As shown here, the axle reference object 820, here in form of the axle 822, comprises a radar reflector 160 in form of a passive radar reflector 162. With a radar reflector 160, the signal quality can advantageously be improved. The radar reflector 160 can be in the form of a corner reflector, in particular comprising one or more arrangements of three mutually perpendicular, intersecting flat surfaces, adapted to reflect the radar signal back to the radar sensor 120. In particular, a radar reflector 160 increases the signal amplitude SA of the part of the radar signal S that is reflected by the axle reference object 820.

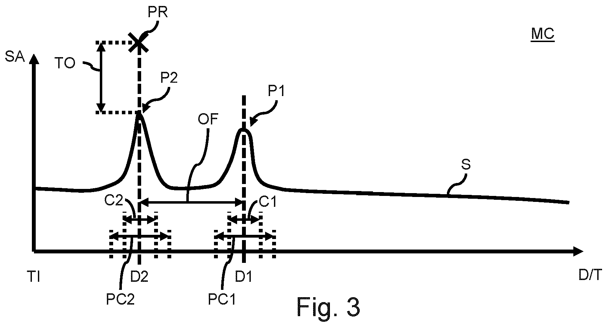

Fig. 3 shows a schematic illustration of a radar signal S acquired by the radar sensor 120 in one measurement cycle MC. The radar sensor 120 is adapted to determine a distance to and/or a position of and/or a velocity of a foreign object, in particular the axle reference object 820, based on a reflection of the radar signal S by the foreign object, in particular by the axle reference object 820.

One measurement cycle MC comprises the emitting of one or more electromagnetic waves EW by the radar sensor 120 at a specified initial point in time TI. The one or more electromagnetic waves EW are then reflected by objects within the field of view VF of the radar sensor 120 as reflected electromagnetic waves RW.

The radar sensor 120 is adapted to register the intensity of the incoming reflected electromagnetic waves RW entering the measurement aperture 122 of the radar sensor 120, in particular in form of a signal amplitude SA, along with a time information, in particular a point in time T relative to the initial point in time TI.

The intensity and time information acquired in one measurement cycle MC, in particular the signal amplitude SA over the time T, determine the radar signal S as shown in Fig. 3. Based on the constant velocity of the electromagnetic waves EW and the reflected electromagnetic waves RW respectively, the distance D can be calculated on the basis of the measured period of time T. In particular, each peak P, P1, P2 in the signal amplitude SA can be assigned to a distance D depending on the time T at which it was registered.

In other embodiments, the radar sensor 120 can alternatively or additionally be adapted to calculate the distance D based on another time information, for example a phase shift.

The signal amplitude SA of the radar signal S in the shown diagram represents the intensity of the reflected electromagnetic waves RW by objects within the field of view VF of the radar sensor 120, in particular by the axle reference object 820 and the road surface 2000. The signal amplitude SA can particularly be increased by the size of the object, and/or the reflective characteristics of the object's surface.

In an embodiment of the chassis height measurement system 100 shown in Figs. 1 and 2, there are two signal peaks P1, P2 to be expected in the signal S. The first signal peak P1 is caused by reflected electromagnetic waves RW reflected by the road surface 2000 and therefore represents the road distance signal D1. The road distance signal D1 is characteristic for the distance between the chassis 800 and the road surface 2000. The second signal peak P2 is caused by reflected electromagnetic waves RW reflected by the axle reference object 820 and therefore represents a second, axle distance signal D2. The axle distance signal D2 is characteristic for the distance between the chassis 800 and the axle reference object 820, in particular the axle 822.

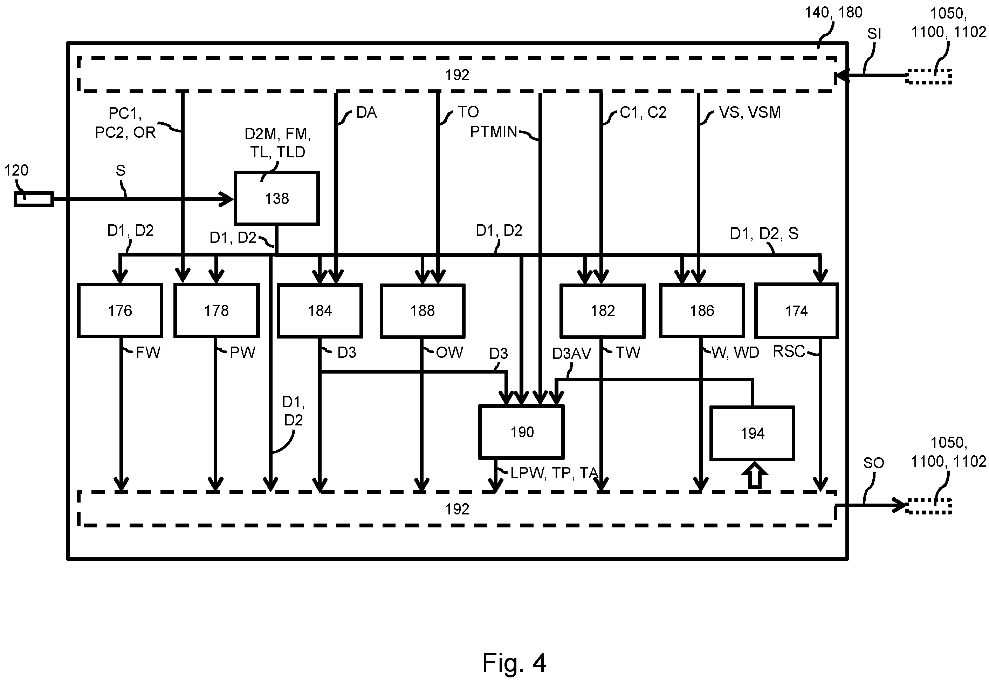

Fig. 4 shows a signal processing module 140, which is adapted to convert the radar signal S acquired by the radar sensor 120 into the road distance signal D1 and the axle distance D2. Furthermore, the signal processing module 140 can comprise further function modules 180. The signal processing module 140 can be integrated into a housing of the radar sensor 120. In other embodiments, the signal processing module 140 can be located elsewhere, for example as part of the vehicle control unit 1050 of the commercial vehicle 1000. It is also possible that the signal processing module 140 is distributed on several devices and/or that one or more functional modules 180 are located outside the signal processing module 140, for example as a cloud service or the like.

The signal processing module 140 comprises a distance calculation module 138 adapted to calculate the road distance signal D1 and the axle distance signal D2 on basis of the acquired radar signal S, as described in the context of Fig. 3.

With a further knowledge of an axle diameter DA, which is a constant property of the axle 822 that does not change over time, it is possible to calculate an axle clearance signal D3, in particular through a clearance calculation module 184. In particular, the axle clearance signal D3 can be calculated as follows:

$$D3 = D1 - D2 - DA$$

Axle clearance signal D3 characterizes the vertically oriented axle clearance between the road surface 2000 and the axle 822. The signal processing module 140 can comprise a function check module 176. The function check module 176 is adapted to check whether at least one of both distance signals D1, D2, that is the road distance signal D1 and the axle distance signal D2, is available. In case of both distance signals D1, D2 being absent, the function check module 176 is adapted to output a function warning FW. The function check module 176 thereby tolerates a temporary absence of 1 distance signal, in particular of the road distance signal. In one embodiment, the function check module 176 can be adapted to also output a function warning FW if only one distance signal D1, D2 is absent for a longer period of time, for example for more than 10 minutes.

The signal processing module 140 can comprise a plausibility check module 178, adapted to check the plausibility of the road distance signal D1 and/or the axle distance D2. In one embodiment, the plausibility check module 178 can be adapted to check whether the determined road distance signal D1 lies within a first plausibility corridor PC1 and whether the determined axle distance signal D2 lies within a second plausibility corridor PC2 (cf. Fig. 3). In the case that one of the signals D1, D2 is not within the corresponding plausibility corridor PC1, PC2, a plausibility warning PW can be given. For example, each plausibility corridor PC1, PC2 can have a range of 100 mm, forming a corridor from 50 mm above to 50 mm below a predefined reference value for each distance D1, D2.

In other embodiments, the plausibility check module 178 can be adapted to compare an offset OF between the road distance signal D1 and the axle distance signal D2 to a reference offset OR. The reference offset OR can be predefined and calculated on the basis of reference values for the road distance signal D1 and the axle distance signal D2. In such an embodiment, a plausibility warning PW will be given if the calculated offset OF exceeds the reference offset OR.

The signal processing module 140 can further comprise an object detection module 188, adapted to detect objects 900, such as debris, ice or dirt, on the axle reference object 820, in particular on the axle 822. In particular, the object detection module 188 is adapted to compare a measured second peak P2 of the radar signal S to a clean surface reference value PR (cf. Fig. 3). The clean surface reference value PR represents a signal amplitude AS a of a radar signal S reflected by a clean axle reference object 820. The greater the difference between the second peak P2 and the clean surface reference value PR, the more likely is the presence of foreign objects 900 on the axle reference object 820 that obstruct a proper reflection of the radar signal S. In particular, an object presence threshold TO can be defined that characterizes a difference between the second peak P2 and the clean surface reference value PR. The object detection module 188 can be adapted to register the presence of an object 900 and output an object presence warning OW, if the object presence threshold TO is exceeded.

The signal processing module 140 can comprise a road surface characteristic determination module 174. The road surface characteristic determination module 174 is adapted to determine a road surface characteristic RSC, which may e. g. be a road surface smoothness, a road surface wetness or the presence of a bump or a pothole in the road surface. The road surface characteristic determination module 174 may determine the road surface characteristic RSC based on a presence of the road distance signal D1, where e.g. absence of the road distance signal may indicate a smooth and/or flooded road surface. Alternatively or cumulatively, the road surface characteristic determination module 174 may determine the road surface characteristic RSC based on a change of the road distance signal D1 and/or the axle distance signal D2 over time, where e.g. an increase and then corresponding decrease of the road distance signal D1 together with an unchanged axle distance signal D2 might indicate a pothole under the vehicle 1000, which does not extend under the wheels of the vehicle 1000. Alternatively or cumulatively, the road surface characteristic determination module 174 may determine the road surface characteristic RSC based on a comparison of the road distance signal D1 and the axle distance signal D2 and/or a comparison of a rate of change of the road distance signal D1 and the axle distance signal D2, where e.g. in the above scenario with the pothole under the vehicle the rate of change of the road distance D1 may indicate a shape of the pothole, that is, a steepness of walls of the pothole, a depth of the pothole and a diameter of the pothole may all be determined from the rate of change of the road distance D1. Alternatively or cumulatively, the road surface characteristic determination module 174 may determine the road surface characteristic RSC based on an intensity of the radar signal S measured by the radar sensor, where e. g. a high intensity of the radar signal S may indicate a rough and/or wet surface and a low high intensity of the radar signal S may indicate a smoother and/or dry surface. A change and/or rate of change of the radar signal S may be used to derive comparative smoothness and/or wetness of the road surface. The road surface characteristic determination module 174 may determine the road surface characteristic RSC aided by external data provided to the road surface characteristic determination module 174 in advance and/or on demand, such as historical data, map data, weather data, vehicle condition data or road condition data.

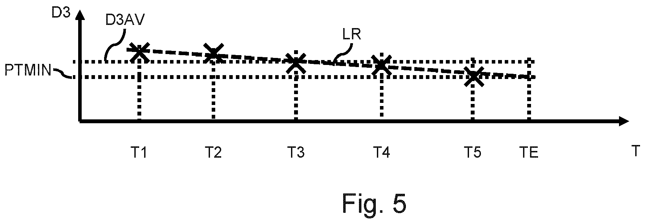

Fig. 5 shows an illustration of exemplary statistical calculations on the axle clearance signal D3, by example of an average axle clearance D3AV. The signal processing module 140 can further comprise a tire pressure module 190, which is adapted to determine a tire pressure PT of one or more tires 860, in particular an average tire pressure PTA for the tires 860 assigned to one axle 820. The type pressure module 190 can be adapted to give a low pressure warning signal LPW if an average axle clearance D3AV (cf. Fig. 5) of the axle clearance signal D3 falls below a low pressure threshold PTMIN. With a decreasing average axle clearance D3AV, one can conclude that the tire pressure, in particular an average tire pressure of an axle, has decreased over time, since the height of the axle 822 above the road surface 2000 has decreased accordingly. In particular, the average axle clearance D3AV can be calculated as an average value of axle clearance signals D3 calculated over a past period of time, for example over the last 10 minutes. Such previously calculated values can be stored in a history record module 194. In the example shown in figure 5, a an axle clearance signal D3 from a first to fifth previous point in time T1-T5 is used as a basis for the calculation of the average axle clearance D3AV.

In other embodiments, the tire pressure module 190 can be adapted to perform a linear regression LR of the previously calculated axle clearance signals D3. Via a linear regression LR, an estimated point in time TE can be estimated at which the axle clearance signal D3 will fall below the low pressure threshold PTMIN.

The signal processing module 140 can further comprise a tolerance corridor module 182 adapted to determine whether the road distance signal D1 is within a first tolerance corridor C1 and/or the axle distance signal D2 is within a second tolerance corridor C2. As opposed to the plausibility corridors PC1, PC2 which serve to check if determined distance values are plausible at all, the tolerance corridors C1, C2 are usually smaller, for example comprise a range of 50 mm and have the purpose of monitoring any immediate occurrence of an unexpected event such as a critical road condition or a technical malfunction. In the case that one of the signals D1, D2 is not within the corresponding tolerance corridor C1, C2, a tolerance warning TW will be given.

The signal processing module 140 can further comprise a weight calculation module 186 adapted to calculate a weight W or a change in weight WD based on the road distance signal D1 and/or the axle distance signal D2. In particular, the weight calculation module 186 can perform a calculation based on a vehicle suspension model OF ESM, which is a mathematical model linking the measured distance, in particular the axle distance signal D2, to a weight W of the vehicle. The vehicle suspension model VSM therefore describes the reaction of the vehicle 1000, in particular of the suspension system 840 of the vehicle 1000, to an increase in weight W. The greater the weight W, the smaller the axle distance signal D2 gets, due to the increased load on the suspension 840. Further, the weight calculation module 186 can be adapted to receive a standing variable VS indicating that the vehicle 1000 is not moving. The standing variable VS can be of boolean nature and can be used as a requirement for starting the weight calculation. If the vehicle 1000 is not moving, it is most likely that any changes in distance, in particular any change of the axle distance signal D2, is due to a change of load 1070 of the vehicle 1000. The standing variable VS can for example be obtained from the vehicle bus 1000.

The signal processing module 140 can further comprise an communication module 192, adapted to receive the outputs of the functional modules 180 and provide them, in particular in the form of an output signal SO, to other systems of the vehicle 1000, in particular to a vehicle bus 1100 and/or vehicle control unit 1050. The output signal SO in particular comprises the road distance signal D1 and/or the axle distance signal D2 and/or the axle clearance signal D3 and/or any of the other output signals, warnings and variables of the above-mentioned functional modules 180. The communication module 192 can further be adapted to receive an input signal SI from the vehicle bus system 1100, wherein the input signal SI comprises the input variables for the signal processing module 140, in particular the tolerance corridors C1, C2, the plausibility corridors PC1, PC2, the reference offset OR, the axle diameter DA, the object presence threshold TO, the low pressure threshold PTMIN, the standing variable VS and/or the vehicle suspension model VSM. The input signal SI can contain further variables. Also one or more of the mentioned input variables can be provided in a way other than via the input signal SI. The output signal SO, in particular the axial distance signal D2, can be used as an input variable for a suspension system 840, in particular an air suspension system 842 of the vehicle 1000.

The signal processing module 140 can further comprise a history record module 194 which is adapted to store any of the values calculated by the functional modules 180 over a longer period of time and provide these values to the functional modules 180. The history record module 194 is further adapted to perform statistical calculations based on the stored values, for example to calculate average values such as the average axle clearance D3AV.

List of reference signs (part of the description)

| | |
|---|---|
| 100 | chassis height measurement system |
| 110 | height sensor |
| 120 | radar sensor |
| 122 | measurement aperture of the radar sensor |
| 138 | distance calculation module |
| 140 | signal processing module |
| 160 | radar reflector |
| 162 | passive radar reflector |
| 174 | road surface characteristic determination module |
| 176 | function check module |
| 178 | plausibility check module |
| 180 | functional module |
| 182 | tolerance corridor module |
| 184 | clearance calculation module |
| 186 | weight calculation module |
| 188 | object detection module |
| 190 | tire pressure module |
| 192 | communication module |
| 194 | history record module |
| 800 | chassis |
| 820 | axle reference object |
| 822 | axle |
| 840 | suspension system |
| 842 | air suspension system |
| 860 | tire |
| 900 | objects on the axle reference object |
| 1000 | vehicle |
| 1001 | commercial vehicle |
| 1002 | truck |
| 1004 | trailer |
| 1006 | passenger vehicle |
| 1050 | vehicle control unit |
| 1070 | load |
| 1100 | vehicle bus system |
| 1102 | CAN bus system |
| 1104 | signal line |
| 1200 | independent measurement system for calibration |
| 2000 | road surface |
| 2002 | reference surface |
| AA | aperture angle of the measurement aperture |
| AO | angular offset between radar sensor and axle reference object |
| C1 | first tolerance corridor |
| C2 | second tolerance corridor |
| D1 | road distance signal |
| D2 | axle distance signal |
| D2M | measured axle distance signal |
| D3 | axle clearance signal |
| D3AV | average axle clearance |
| DA | axle diameter |
| DM | measurement direction |
| DR1 | road distance reference value |
| DR2 | axle distance reference value |
| FM | mapping function |
| FW | function warning |
| MC | measurement cycle of the radar sensor |
| OF | offset between road distance signal and axle distance signal |
| OR | reference offset |
| OW | object presence warning |
| P1 | first peak of the signal amplitude |
| P2 | second peak of the signal amplitude |
| PC1, PC2 | first, second plausibility corridor |
| PP | pivot bearing |
| PT | tire pressure |
| PTA | average tire pressure |
| PTMIN | low pressure threshold |
| PR | clean surface reference value |
| RSC | road surface characteristic |
| S | radar signal |
| SA | signal amplitude |
| SI | input signal |
| SO | output signal |
| TE | estimated point in time |
| TL | lookup table |
| LTD | direct lookup table |
| TO | object presence threshold |
| T | point in time |
| TI | initial point in time |
| TS | suspension trajectory |
| TS1 | vertical suspension trajectory |
| TS2 | circular suspension trajectory |
| TW | tolerance warning |
| VF | field of view of the radar sensor |
| VS | standing variable |
| VSM | vehicle suspension model |

W weight
WD change in weight

## Claims

1. Chassis height measurement system (100) for a vehicle (1000), in particular a commercial vehicle (1001) or a passenger vehicle (1006), with an axle (822) suspended by a suspension system (840), in particular an air suspension system (842), comprising:

   - a height sensor (110), adapted to provide a road distance signal (D1), which represents a distance between a road surface (2000) and a chassis (800) of the vehicle (1000), wherein
   - the height sensor (110) is a radar sensor (120) which is fixed to the chassis (800), and with a field of view (VF) defined by a measurement aperture (122) of the radar sensor, **characterized in that**
   - the radar sensor (120) is arranged such that an axle reference object (820), in particular the axle (822), is within the field of view (VF), wherein
   - the radar sensor (120) is adapted to provide an axle distance signal (D2), which represents a distance between the chassis (800) and the axle reference object (820),

   wherein the radar sensor is a single radar sensor providing the road distance signal and the axle distance signal.

2. Chassis height measurement system (100) according to claim 1, **characterized in that** the radar sensor (120) is adapted to provide the road distance signal (D1) and the axle distance signal (D2) within one measurement cycle (MC) of the radar sensor (120).

3. Chassis height measurement system (100) according to claim 1 or 2, **characterized in that** the axle reference object (820), in particular the axle (822), comprises a radar reflector (160), in particular a passive radar reflector (162), oriented towards the radar sensor (120).

4. Chassis height measurement system (100) according to one of the preceding claims, **characterized in that** the radar sensor (120) is a high frequency radar sensor, in particular with a signal frequency between 50 GHz and 200 GHz.

5. Chassis height measurement system (100) according to one of the preceding claims, **characterized in that** the measurement aperture (122) has an aperture angle (AA) between 10° and 25°, in particular between 15 and 20°.

6. Chassis height measurement system (100) according to one of the preceding claims, **characterized in that** the radar sensor (120) comprises a measurement direction (DM) directed towards the road surface (2000) and the radar sensor (120) is arranged in such a way that the measurement direction (DM) is perpendicular to the road surface (2000).

7. Chassis height measurement system (100) according to one of the preceding claims, **characterized in that** the radar sensor (120) is arranged relative with an angular offset (AO) to the axle reference object (820), wherein the angular offset (AO) is between 5° and 10°.

8. Chassis height measurement system (100) according to one of the preceding claims, **characterized by** a distance calculation module (138), which is adapted to determine

   - the road distance signal (D1) from a first distance value at a first peak (P1) of a signal amplitude (SA) and
   - the axle distance signal (D2) from a second distance value at a second peak (P2) of the signal amplitude (SA).

9. Chassis height measurement system (100) according to one of the preceding claims, **characterized by** a road surface characteristic determination module (174), which is adapted to determine a road surface characteristic (RSC) based on

   - a presence of a road distance signal (D1) and/or
   - a change of the road distance signal (D1) and/or the axle distance signal (D2) over time and/or
   - a comparison of the road distance signal (D1) and the axle distance signal (D2) and/or
   - a comparison of a rate of change of the road distance signal (D1) and the axle distance signal (D2) and/or
   - an intensity of a radar signal (S) measured by the radar sensor (120).

10. Chassis height measurement system (100) according to claim 9, **characterized in that** the road surface characteristic (RSC) is determined aided by external data, in particular by historical data, map data, weather data, vehicle condition data or road condition data.

11. Chassis height measurement system (100) according to claim 9 or 10, **characterized in that** the road surface characteristic (RSC) is uploaded to a web-based data storage, in particular a data lake.

12. Chassis height measurement system (100) according to one of the preceding claims, **characterized by** a function check module (176) adapted to check whether at least one distance signal (D1, D2) of the road distance signal (D1) and the axle distance signal (D2) is available.

13. Chassis height measurement system (100) according to one of the preceding claims, **characterized by** a plausibility check module (178), which is adapted to check the plausibility of the road distance signal (D1) and/or the axle distance signal (D2), in particular by comparing the road distance signal (D1) to a first plausibility corridor (PC1) and the axle distance signal (D2) to a second plausibility corridor (PC2), or by comparing an offset (OF) between the road distance signal (D1) and the axle distance signal (D2) to a reference offset (OR).

14. Chassis height measurement system (100) according to one of the preceding claims, **characterized in that** the chassis height measurement system (100) comprises a functional module (180), wherein the functional module is:

    - a tolerance corridor module (182) adapted to determine whether the road distance signal (D1) is within a first tolerance corridor (C1) and/or the axle distance signal (D2) is within a second tolerance corridor (C2), and/or
    - a clearance calculation module (184) adapted to calculate an axle clearance signal (D3) based on the road distance signal (D1) and the axle distance signal (D2), and/or
    - a weight calculation module (186) adapted to calculate a weight (W) or a change in weight (WD) based on the road distance signal (D1) and/or the axle distance signal (D2), and/or
    - an object detection module (188) adapted to detect objects (900) on the axle reference object (820) based on the road distance signal (D1) and the axle distance signal (D2), and/or
    - a tire pressure module (190) adapted to calculate a tire pressure (PT) of at least one tire (860) or an average tire pressure (PTA), based on the road distance signal (D1) and the axle distance signal (D2), and/or
    - a communication module (192) adapted to provide an output signal (SO) for a vehicle bus system (1100) and/or for the suspension system (1200), wherein the output signal (SO) comprises the road distance signal (D1) and/or the axle distance signal (D2).

15. Vehicle (1000), in particular commercial vehicle (1001) such as a truck (1002) or a trailer (1004), or passenger vehicle (1006), comprising

    - at least one axle (822) suspended by a suspension system (840), in particular an air suspension system (842), and
    - a chassis height measurement system (100) according to one of the preceding claims.

16. Vehicle (1000) according to claim 15, **characterized by** a vehicle bus system (1100), in particular a CAN bus system (1102), wherein the chassis height measurement system (100) is adapted to provide an output signal (SO) comprising the road distance signal (D1) and/or the axle distance signal (D2) to the vehicle bus system (1100).

17. Method of operating a chassis height measurement system (100) according to one of claims 1 to 14, comprising the steps:

    - performing a radar measurement by means of the radar sensor (120),
    - providing a road distance signal (D1) and an axle distance signal (D2), in particular within one measurement cycle (MC) of the radar sensor (120).

18. Method according to claim 17, further comprising the steps:

    - determining whether a road distance signal (D1) is present and/or
    - monitoring a change of the road distance signal (D1) and/or the axle distance signal (D2) over time and/or
    - comparing the road distance signal (D1) and the axle distance signal (D2) and/or
    - comparing a rate of change of the road distance signal (D1) and a rate of change of the axle distance signal (D2) and/or
    - determining an intensity of a radar signal (S) measured by the radar sensor (120) and
    - determining a road surface characteristic (RSC) based on the presence or absence of the road distance signal (D1) and/or the change of the road distance signal (D1) and/or the axle distance signal (D2) over time and/or the comparison of the road distance signal (D1) and the axle distance signal (D2) and/or on the comparison of the rate of change of the road distance signal (D1) and the rate of change of the axle distance signal (D2) and/or on the intensity of a signal measured by the radar sensor (120),
    - where determining the road surface characteristic (RSC) is optionally aided by external data such as historical data, map data, weather data, vehicle condition data or road condition data.

19. Method according to claim 18, further comprising the step:

- uploading the road surface characteristic (RSC) to a web-based data storage, in particular a data lake.

20. Method according to one of claims 17 to 19, further comprising the steps:

- determining a first tolerance corridor (C1) for the road distance signal (D1) and/or a second tolerance corridor (C2) for the axle distance signal (D2), and
- comparing whether the road distance signal (D1) is within the first tolerance corridor (C1) and/or the axle distance signal (D2) is within the second tolerance corridor (C2).

21. Method according to one of claims 17 to 20, further comprising one of the steps:

- calculating an axle clearance signal (D3) based on the road distance signal (D1) and the axle distance signal (D2), and/or
- calculating a weight (W) or a change in weight (WD) based on the road distance signal (D1) and/or the axle distance signal (D2), in particular during a non-moving state (S) of the vehicle (1000), and/or
- detecting the presence of foreign objects (900), in particular dirt, ice or debris, on the axle reference object (820), in particular an axle (822), based on the road distance signal (D1) and the axle distance signal (D2), and/or
- calculating a tire pressure (PT) of at least one tire (860) or an average tire pressure (PTA), based on the road distance signal (D1) and the axle distance signal (D2), and/or
- generating an output signal (SO) for a vehicle bus system (1100), in particular for a CAN bus system (1102), and/or for an suspension system (1200) of the vehicle (1000), wherein the output signal (SO) comprises the road distance signal (D1) and/or the axle distance signal (D2).

22. Method according to one of claims 17 to 21, further comprising a calibration procedure, comprising the determination of at least one road distance reference value (DR1) for the road distance signal (D1) and/or one axle distance reference value (DR2) for the axle distance signal (D2), in particular further comprising the establishing of a direct lookup table (TLD) describing a relationship between a measured axle distance signal (D2M) and an axle distance signal (D2).

**Patentansprüche**

1. Fahrgestellhöhenmesssystem (100) für ein Fahrzeug (1000), insbesondere ein Nutzfahrzeug (1001) oder einen Personenkraftwagen (1006), mit einer Achse (822), die durch ein Federungssystem (840), insbesondere ein Luftfederungssystem (842), gefedert ist, umfassend:

- einen Höhensensor (110), der angepasst ist, um ein Fahrbahnabstandssignal (D1) bereitzustellen, das einen Abstand zwischen einer Fahrbahnoberfläche (2000) und einem Fahrgestell (800) des Fahrzeugs (1000) darstellt, wobei
- der Höhensensor (110) ein Radarsensor (120) ist, der an dem Fahrgestell (800) befestigt ist, und mit einem Sichtfeld (VF), das durch eine Messöffnung (122) des Radarsensors definiert ist,

**dadurch gekennzeichnet, dass**
- der Radarsensor (120) derart angeordnet ist, dass sich ein Achsenreferenzobjekt (820), insbesondere die Achse (822), innerhalb des Sichtfelds (VF) befindet, wobei
- der Radarsensor (120) angepasst ist, um ein Achsenabstandssignal (D2) bereitzustellen, das einen Abstand zwischen dem Fahrgestell (800) und dem Achsenreferenzobjekt (820) darstellt,

wobei der Radarsensor ein einzelner Radarsensor ist, der das Fahrbahnabstandssignal und das Achsenabstandssignal bereitstellt.

2. Fahrgestellhöhenmesssystem (100) nach Anspruch 1,
**dadurch gekennzeichnet, dass** der Radarsensor (120) angepasst ist, um das Fahrbahnabstandssignal (D1) und das Achsenabstandssignal (D2) innerhalb eines Messzyklus (MC) des Radarsensors (120) bereitzustellen.

3. Fahrgestellhöhenmesssystem (100) nach Anspruch 1 oder 2,
**dadurch gekennzeichnet, dass** das Achsenreferenzobjekt (820), insbesondere die Achse (822), einen Radarreflektor (160), insbesondere einen passiven Radarreflektor (162), umfasst, der in Richtung des Radarsensors (120) ausgerichtet ist.

4. Fahrgestellhöhenmesssystem (100) nach einem der vorstehenden Ansprüche, **dadurch gekennzeichnet, dass** der Radarsensor (120) ein Hochfrequenzradarsensor ist, insbesondere mit einer Signalfrequenz zwischen 50 GHz und 200 GHz.

5. Fahrgestellhöhenmesssystem (100) nach einem der vorstehenden Ansprüche, **dadurch gekennzeichnet, dass** die Messöffnung (122) einen Öffnungswinkel (AA) zwischen 10° und 25°, insbesondere zwischen 15 und 20°, aufweist.

6. Fahrgestellhöhenmesssystem (100) nach einem der vorstehenden Ansprüche, **dadurch gekennzeichnet, dass** der Radarsensor (120) eine Messrichtung (DM) umfasst, die in Richtung der Fahrbahnoberfläche (2000) gerichtet ist, und der Radarsensor (120) derart angeordnet ist, dass die Messrichtung (DM) senkrecht zu der Fahrbahnoberfläche (2000) steht.

7. Fahrgestellhöhenmesssystem (100) nach einem der vorstehenden Ansprüche, **dadurch gekennzeichnet, dass** der Radarsensor (120) relativ mit einem Winkelversatz (AO) zu dem Achsenreferenzobjekt (820) angeordnet ist, wobei der Winkelversatz (AO) zwischen 5° und 10° liegt.

8. Fahrgestellhöhenmesssystem (100) nach einem der vorstehenden Ansprüche, **gekennzeichnet durch** ein Abstandsberechnungsmodul (138), das angepasst ist, um zu bestimmen

   - das Fahrbahnabstandssignal (D1) von einem ersten Abstandswert an einem ersten Peak (P1) einer Signalamplitude (SA) und
   - das Achsenabstandssignal (D2) von einem zweiten Abstandswert an einem zweiten Peak (P2) der Signalamplitude (SA).

9. Fahrgestellhöhenmesssystem (100) nach einem der vorstehenden Ansprüche, **gekennzeichnet durch** ein Fahrbahnoberflächeneigenschaftenbestimmungsmodul (174), das angepasst ist, um eine Fahrbahnoberflächeneigenschaft (RSC) zu bestimmen, basierend auf

   - einem Vorhandensein eines Fahrbahnabstandssignals (D1) und/oder
   - einer Änderung des Fahrbahnabstandssignals (D1) und/oder des Achsenabstandssignals (D2) im Laufe der Zeit und/oder
   - einem Vergleich des Fahrbahnabstandssignals (D1) und des Achsenabstandssignals (D2) und/oder
   - einem Vergleich einer Änderungsrate des Fahrbahnabstandssignals (D1) und des Achsenabstandssignals (D2) und/oder
   - einer Intensität eines Radarsignals (S), die durch den Radarsensor (120) gemessen wird.

10. Fahrgestellhöhenmesssystem (100) nach Anspruch 9,
    **dadurch gekennzeichnet, dass** die Fahrbahnoberflächeneigenschaft (RSC) unterstützt durch externe Daten bestimmt wird, insbesondere durch historische Daten, Kartendaten, Wetterdaten, Fahrzeugzustandsdaten oder Fahrbahnzustandsdaten.

11. Fahrgestellhöhenmesssystem (100) nach Anspruch 9 oder 10,
    **dadurch gekennzeichnet, dass** die Fahrbahnoberflächeneigenschaft (RSC) in einen webbasierten Datenspeicher, insbesondere einen Data Lake, hochgeladen wird.

12. Fahrgestellhöhenmesssystem (100) nach einem der vorstehenden Ansprüche, **gekennzeichnet durch** ein Funktionsprüfmodul (176), das angepasst ist, um zu prüfen, ob mindestens ein Abstandssignal (D1, D2) des Fahrbahnabstandssignals (D1) und des Achsenabstandssignals (D2) verfügbar ist.

13. Fahrgestellhöhenmesssystem (100) nach einem der vorstehenden Ansprüche, **gekennzeichnet durch** ein Plausibilitätsprüfmodul (178), das angepasst ist, um die Plausibilität des Fahrbahnabstandssignals (D1) und/oder des Achsenabstandssignals (D2) zu prüfen, insbesondere durch Vergleichen des Fahrbahnabstandssignals (D1) mit einem ersten Plausibilitätskorridor (PC1) und des Achsenabstandssignals (D2) mit einem zweiten Plausibilitätskorridor (PC2), oder durch Vergleichen eines Versatzes (OF) zwischen dem Fahrbahnabstandssignal (D1) und dem Achsenabstandssignal (D2) mit einem Referenzversatz (OR).

14. Fahrgestellhöhenmesssystem (100) nach einem der vorstehenden Ansprüche, **dadurch gekennzeichnet, dass** das Fahrgestellhöhenmesssystem (100) ein Funktionsmodul (180) umfasst, wobei das Funktionsmodul ist:

    - ein Toleranzkorridormodul (182), das angepasst ist, um zu bestimmen, ob das Fahrbahnabstandssignal (D1) innerhalb eines ersten Toleranzkorridors (C1) liegt und/oder das Achsenabstandssignal (D2) innerhalb eines zweiten Toleranzkorridors (C2) liegt, und/oder
    - ein Freigabeberechnungsmodul (184), das angepasst ist, um ein Achsenfreigabesignal (D3) basierend auf dem Fahrbahnabstandssignal (D1) und dem Achsenabstandssignal (D2) zu berechnen, und/oder
    - ein Gewichtsberechnungsmodul (186), das angepasst ist, um ein Gewicht (W) oder eine Gewichtsänderung (WD) basierend auf dem Fahrbahnabstandssignal (D1) und/oder dem Achsenabstandssignal (D2) zu berechnen, und/oder
    - ein Objekterfassungsmodul (188), das angepasst ist, um Objekte (900) auf dem Achsenreferenzobjekt (820) basierend auf dem Fahrbahnabstandssignal (D1) und dem Achsenabstandssignal (D2) zu erfassen, und/oder
    - ein Reifendruckmodul (190), das angepasst ist, um einen Reifendruck (PT) mindestens eines Reifens (860) oder einen durchschnittlichen Reifendruck (PTA) basierend auf dem Fahrbahnabstandssignal (D1) und dem Achsenabstandssignal (D2) zu berechnen, und/oder

- ein Kommunikationsmodul (192), das angepasst ist, um ein Ausgangssignal (SO) für ein Fahrzeugbussystem (1100) und/oder für das Federungssystem (1200) bereitzustellen, wobei das Ausgangssignal (SO) das Fahrbahnabstandssignal (D1) und/oder das Achsenabstandssignal (D2) umfasst.

15. Fahrzeug (1000), insbesondere ein Nutzfahrzeug (1001) wie ein Lastkraftwagen (1002) oder ein Anhänger (1004), oder ein Personenkraftwagen (1006), umfassend

    - mindestens eine Achse (822), die durch ein Federungssystem (840), insbesondere ein Luftfederungssystem (842), gefedert ist, und
    - ein Fahrgestellhöhenmesssystem (100) nach einem der vorstehenden Ansprüche.

16. Fahrzeug (1000) nach Anspruch 15, **gekennzeichnet durch** ein Fahrzeugbussystem (1100), insbesondere ein CAN-Bussystem (1102), wobei das Fahrgestellhöhenmesssystem (100) angepasst ist, um ein Ausgangssignal (SO) bereitzustellen, umfassend das Fahrbahnabstandssignal (D1) und/oder das Achsenabstandssignal (D2) an das Fahrzeugbussystem (1100).

17. Verfahren zum Betreiben eines Fahrgestellhöhenmesssystems (100) nach einem der Ansprüche 1 bis 14, umfassend die Schritte:

    - Durchführen einer Radarmessung mittels des Radarsensors (120),
    - Bereitstellen eines Fahrbahnabstandssignals (D1) und eines Achsenabstandssignals (D2), insbesondere innerhalb eines Messzyklus (MC) des Radarsensors (120).

18. Verfahren nach Anspruch 17, ferner umfassend die Schritte:

    - Bestimmen, ob ein Fahrbahnabstandssignal (D1) vorhanden ist, und/oder
    - Überwachen einer Änderung des Fahrbahnabstandssignals (D1) und/oder des Achsenabstandssignals (D2) im Laufe der Zeit, und/oder
    - Vergleichen des Fahrbahnabstandssignals (D1) und des Achsenabstandssignals (D2), und/oder
    - Vergleichen einer Änderungsrate des Fahrbahnabstandssignals (D1) und einer Änderungsrate des Achsenabstandssignals (D2), und/oder
    - Bestimmen einer Intensität eines Radarsignals (S), das durch den Radarsensor (120) gemessen wird, und

- Bestimmen einer Fahrbahnoberflächeneigenschaft (RSC) basierend auf dem Vorhandensein oder Fehlen des Fahrbahnabstandssignals (D1) und/oder der Änderung des Fahrbahnabstandssignals (D1) und/oder des Achsenabstandssignals (D2) im Laufe der Zeit und/oder dem Vergleich des Fahrbahnabstandssignals (D1) und des Achsenabstandssignals (D2) und/oder dem Vergleich der Änderungsrate des Fahrbahnabstandssignals (D1) und der Änderungsrate des Achsenabstandssignals (D2) und/oder der Intensität eines Signals, das durch den Radarsensor (120) gemessen wird,
- wobei das Bestimmen der Fahrbahnoberflächeneigenschaft (RSC) optional durch externe Daten wie historische Daten, Kartendaten, Wetterdaten, Fahrzeugzustandsdaten oder Fahrbahnzustandsdaten unterstützt wird.

19. Verfahren nach Anspruch 18, ferner umfassend den Schritt:

    - Hochladen der Fahrbahnoberflächeneigenschaft (RSC) in eine webbasierte Datenspeicherung, insbesondere einen Data Lake.

20. Verfahren nach einem der Ansprüche 17 bis 19, ferner umfassend die Schritte:

    - Bestimmen eines ersten Toleranzkorridors (C1) für das Fahrbahnabstandssignal (D1) und/oder eines zweiten Toleranzkorridors (C2) für das Achsenabstandssignal (D2), und
    - Vergleichen, ob das Fahrbahnabstandssignal (D1) innerhalb des ersten Toleranzkorridors (C1) liegt und/oder das Achsenabstandssignal (D2) innerhalb des zweiten Toleranzkorridors (C2) liegt.

21. Verfahren nach einem der Ansprüche 17 bis 20, ferner umfassend einen der Schritte:

    - Berechnen eines Achsenfreigabesignals (D3) basierend auf dem Fahrbahnabstandssignal (D1) und dem Achsenabstandssignal (D2), und/oder
    - Berechnen eines Gewichts (W) oder einer Gewichtsänderung (WD) basierend auf dem Fahrbahnabstandssignal (D1) und/oder dem Achsenabstandssignal (D2), insbesondere während eines nicht bewegten Zustands (S) des Fahrzeugs (1000), und/oder
    - Erfassen des Vorhandenseins von Fremdkörpern (900), insbesondere Schmutz, Eis oder Ablagerungen, an dem Achsenreferenzobjekt (820), insbesondere einer Achse (822), basierend auf dem Fahrbahnabstandssignal (D1) und dem Achsenabstandssignal (D2), und/oder

- Berechnen eines Reifendrucks (PT) mindestens eines Reifens (860) oder eines durchschnittlichen Reifendrucks (PTA), basierend auf dem Fahrbahnabstandssignal (D1) und dem Achsenabstandssignal (D2), und/oder

- Erzeugen eines Ausgangssignals (SO) für ein Fahrzeugbussystem (1100), insbesondere für ein CAN-Bussystem (1102), und/oder für ein Federungssystem (1200) des Fahrzeugs (1000), wobei das Ausgangssignal (SO) das Fahrbahnabstandssignal (D1) und/oder das Achsenabstandssignal (D2) umfasst.

22. Verfahren nach einem der Ansprüche 17 bis 21, ferner umfassend ein Kalibrierverfahren, umfassend die Bestimmung mindestens eines Fahrbahnabstandsreferenzwerts (DR1) für das Fahrbahnabstandssignal (D1) und/oder eines Achsenabstandsreferenzwerts (DR2) für das Achsenabstandssignal (D2), insbesondere ferner umfassend das Erstellen einer direkten Nachschlagtabelle (TLD), die eine Beziehung zwischen einem gemessenen Achsenabstandssignal (D2M) und einem Achsenabstandssignal (D2) beschreibt.

**Revendications**

1. Système de mesure de hauteur de châssis (100) pour un véhicule (1000), en particulier un véhicule utilitaire (1001) ou un véhicule de tourisme (1006), avec un essieu (822) suspendu par un système de suspension (840), en particulier un système de suspension à air (842), comprenant :

   - un capteur de hauteur (110), adapté pour fournir un signal de distance routière (D1), qui représente une distance entre un revêtement routier (2000) et un châssis (800) du véhicule (1000), dans lequel
   - le capteur de hauteur (110) est un capteur radar (120) qui est fixé au châssis (800), et avec un champ de vision (VF) défini par une ouverture de mesure (122) du capteur radar, **caractérisé en ce que**
   - le capteur radar (120) est agencé de telle sorte qu'un objet de référence d'essieu (820), en particulier l'essieu (822), se trouve dans le champ de vision (VF), dans lequel
   - le capteur radar (120) est adapté pour fournir un signal de distance d'essieu (D2), qui représente une distance entre le châssis (800) et l'objet de référence d'essieu (820), dans lequel le capteur radar est un capteur radar unique fournissant le signal de distance routière et le signal de distance d'essieu.

2. Système de mesure de hauteur de châssis (100) selon la revendication 1, **caractérisé en ce que** le capteur radar (120) est adapté pour fournir le signal de distance routière (D1) et le signal de distance d'essieu (D2) au sein d'un cycle de mesure (MC) du capteur radar (120).

3. Système de mesure de hauteur de châssis (100) selon la revendication 1 ou 2, **caractérisé en ce que** l'objet de référence d'essieu (820), en particulier l'essieu (822), comprend un réflecteur radar (160), en particulier un réflecteur radar passif (162), orienté vers le capteur radar (120).

4. Système de mesure de hauteur de châssis (100) selon l'une des revendications précédentes, **caractérisé en ce que** le capteur radar (120) est un capteur radar haute fréquence, en particulier avec une fréquence de signal comprise entre 50 GHz et 200 GHz.

5. Système de mesure de hauteur de châssis (100) selon l'une des revendications précédentes, **caractérisé en ce que** l'ouverture de mesure (122) a un angle d'ouverture (AA) compris entre 10 ° et 25 °, en particulier entre 15 et 20 °.

6. Système de mesure de hauteur de châssis (100) selon l'une des revendications précédentes, **caractérisé en ce que** le capteur radar (120) comprend une direction de mesure (DM) dirigée vers le revêtement routier (2000) et le capteur radar (120) est agencé de telle sorte que la direction de mesure (DM) est perpendiculaire au revêtement routier (2000).

7. Système de mesure de hauteur de châssis (100) selon l'une des revendications précédentes, **caractérisé en ce que** le capteur radar (120) est agencé par rapport à un décalage angulaire (AO) par rapport à l'objet de référence d'essieu (820), dans lequel le décalage angulaire (AO) est compris entre 5 ° et 10 °.

8. Système de mesure de hauteur de châssis (100) selon l'une des revendications précédentes, **caractérisé par** un module de calcul de distance (138), qui est adapté pour déterminer

   - le signal de distance routière (D1) à partir d'une première valeur de distance au niveau d'un premier pic (P1) d'une amplitude de signal (SA) et
   - le signal de distance d'essieu (D2) à partir d'une seconde valeur de distance au niveau d'un second pic (P2) de l'amplitude de signal (SA).

9. Système de mesure de hauteur de châssis (100) selon l'une des revendications précédentes, **caractérisé par** un module de détermination de caractéristique de revêtement routier (174), qui est adapté pour déterminer une caractéristique de revêtement routier (RSC) en fonction de

- une présence d'un signal de distance routière (D1) et/ou
- une variation du signal de distance routière (D1) et/ou du signal de distance d'essieu (D2) au fil du temps et/ou
- une comparaison du signal de distance routière (D1) et du signal de distance d'essieu (D2) et/ou
- une comparaison d'un taux de variation du signal de distance routière (D1) et du signal de distance d'essieu (D2) et/ou
- une intensité d'un signal radar (S) mesuré par le capteur radar (120).

10. Système de mesure de hauteur de châssis (100) selon la revendication 9, **caractérisé en ce que** la caractéristique de revêtement routier (RSC) est déterminée à l'aide de données externes, en particulier par des données historiques, des données cartographiques, des données météorologiques, des données relatives à l'état de véhicule ou des données relatives à l'état de la route.

11. Système de mesure de hauteur de châssis (100) selon la revendication 9 ou 10, **caractérisé en ce que** la caractéristique de revêtement routier (RSC) est chargée dans un stockage de données sur le Web, en particulier un lac de données.

12. Système de mesure de hauteur de châssis (100) selon l'une des revendications précédentes, **caractérisé par** un module de contrôle de fonction (176) adapté pour vérifier si au moins un signal de distance (D1, D2) du signal de distance routière (D1) et du signal de distance d'essieu (D2) est disponible.

13. Système de mesure de hauteur de châssis (100) selon l'une des revendications précédentes, **caractérisé par** un module de contrôle de plausibilité (178), qui est adapté pour vérifier la plausibilité du signal de distance routière (D1) et/ou du signal de distance d'essieu (D2), en particulier en comparant le signal de distance routière (D1) à un premier couloir de plausibilité (PC1) et le signal de distance d'essieu (D2) à un second couloir de plausibilité (PC2), ou en comparant un décalage (OF) entre le signal de distance routière (D1) et le signal de distance d'essieu (D2) à un décalage de référence (OR).

14. Système de mesure de hauteur de châssis (100) selon l'une des revendications précédentes, **carac-** **térisé en ce que** le système de mesure de hauteur de châssis (100) comprend un module fonctionnel (180), dans lequel le module fonctionnel est :

- un module de couloir de tolérance (182) adapté pour déterminer si le signal de distance routière (D1) se trouve dans un premier couloir de tolérance (C1) et/ou si le signal de distance d'essieu (D2) se trouve dans un second couloir de tolérance (C2), et/ou
- un module de calcul de dégagement (184) adapté pour calculer un signal de dégagement d'essieu (D3) en fonction du signal de distance routière (D1) et du signal de distance d'essieu (D2), et/ou
- un module de calcul de poids (186) adapté pour calculer un poids (W) ou une variation de poids (WD) en fonction du signal de distance routière (D1) et/ou du signal de distance d'essieu (D2), et/ou
- un module de détection d'objet (188) adapté pour détecter des objets (900) sur l'objet de référence d'essieu (820) en fonction du signal de distance routière (D1) et du signal de distance d'essieu (D2), et/ou
- un module de pression de pneu (190) adapté pour calculer une pression de pneu (PT) d'au moins un pneu (860) ou une pression moyenne de pneu (PTA), en fonction du signal de distance routière (D1) et du signal de distance d'essieu (D2), et/ou
- un module de communication (192) adapté pour fournir un signal de sortie (SO) pour un système de bus de véhicule (1100) et/ou pour le système de suspension (1200), dans lequel le signal de sortie (SO) comprend le signal de distance routière (D1) et/ou le signal de distance d'essieu (D2).

15. Véhicule (1000), en particulier un véhicule utilitaire (1001) tel qu'un camion (1002) ou une remorque (1004), ou un véhicule de tourisme (1006), comprenant

- au moins un essieu (822) suspendu par un système de suspension (840), en particulier un système de suspension à air (842), et
- un système de mesure de hauteur de châssis (100) selon l'une des revendications précédentes.

16. Véhicule (1000) selon la revendication 15, **caractérisé par** un système de bus de véhicule (1100), en particulier un système de bus CAN (1102), dans lequel le système de mesure de hauteur de châssis (100) est adapté pour fournir un signal de sortie (SO) comprenant le signal de distance routière (D1) et/ou le signal de distance d'essieu (D2) au système de bus de véhicule (1100).

17. Procédé de système de mesure de hauteur de châssis (100) selon l'une des revendications 1 à 14, comprenant les étapes :

- de réalisation d'une mesure radar au moyen du capteur radar (120),
- de fourniture d'un signal de distance routière (D1) et d'un signal de distance d'essieu (D2), en particulier au sein d'un cycle de mesure (MC) du capteur radar (120).

18. Procédé selon la revendication 17, comprenant en outre les étapes :

- de détermination de la présence ou non d'un signal de distance routière (D1) et/ou
- de surveillance d'une variation du signal de distance routière (D1) et/ou du signal de distance d'essieu (D2) au fil du temps et/ou
- de comparaison du signal de distance routière (D1) et du signal de distance d'essieu (D2) et/ou
- de comparaison d'un taux de variation du signal de distance routière (D1) et d'un taux de variation du signal de distance d'essieu (D2) et/ou
- de détermination d'une intensité d'un signal radar (S) mesuré par le capteur radar (120) et
- de détermination d'une caractéristique de revêtement routier (RSC) en fonction de la présence ou de l'absence du signal de distance routière (D1) et/ou de la variation du signal de distance routière (D1) et/ou du signal de distance d'essieu (D2) au fil du temps et/ou de la comparaison du signal de distance routière (D1) et du signal de distance d'essieu (D2) et/ou de la comparaison du taux de variation du signal de distance routière (D1) et du taux de variation du signal de distance d'essieu (D2) et/ou de l'intensité d'un signal mesuré par le capteur radar (120),
- où la détermination de la caractéristique de revêtement routier (RSC) est éventuellement facilitée par des données externes telles que des données historiques, des données cartographiques, des données météorologiques, des données relatives à l'état du véhicule ou des données relatives à l'état de la route.

19. Procédé selon la revendication 18, comprenant en outre l'étape :

- le chargement de la caractéristique de revêtement routier (RSC) dans un stockage de données sur le Web, en particulier un lac de données.

20. Procédé selon l'une des revendications 17 à 19, comprenant en outre les étapes :

- de détermination d'un premier couloir de tolérance (C1) pour le signal de distance routière (D1) et/ou d'un second couloir de tolérance (C2) pour le signal de distance d'essieu (D2), et
- de comparaison si le signal de distance routière (D1) se trouve au sein du premier couloir de tolérance (C1) et/ou si le signal de distance d'essieu (D2) se trouve au sein du second couloir de tolérance (C2).

21. Procédé selon l'une des revendications 17 à 20, comprenant en outre l'une des étapes :

- de calcul d'un signal de dégagement d'essieu (D3) en fonction du signal de distance routière (D1) et du signal de distance d'essieu (D2), et/ou
- de calcul d'un poids (W) ou d'une variation de poids (WD) en fonction du signal de distance routière (D1) et/ou du signal de distance d'essieu (D2), en particulier pendant un état immobile (S) du véhicule (1000), et/ou
- de détection de la présence de corps étrangers (900), en particulier de saleté, de glace ou de débris, sur l'objet de référence d'essieu (820), en particulier un essieu (822), en fonction du signal de distance routière (D1) et du signal de distance d'essieu (D2), et/ou
- de calcul d'une pression de pneu (PT) d'au moins un pneu (860) ou d'une pression moyenne de pneu (PTA), en fonction du signal de distance routière (D1) et du signal de distance d'essieu (D2), et/ou
- de génération d'un signal de sortie (SO) pour un système de bus de véhicule (1100), en particulier pour un système de bus CAN (1102), et/ou pour un système de suspension (1200) du véhicule (1000), dans lequel le signal de sortie (SO) comprend le signal de distance routière (D1) et/ou le signal de distance d'essieu (D2).

22. Procédé selon l'une des revendications 17 à 21, comprenant en outre une procédure d'étalonnage, comprenant la détermination d'au moins une valeur de référence de distance routière (DR1) pour le signal de distance routière (D1) et/ou d'une valeur de référence de distance d'essieu (DR2) pour le signal de distance d'essieu (D2), en particulier comprenant en outre l'établissement d'une table de recherche directe (TLD) décrivant une relation entre un signal de distance d'essieu mesuré (D2M) et un signal de distance d'essieu (D2).

Fig. 1

Fig. 2

Fig. 3

EP 4 020 012 B1

Fig. 4

EP 4 020 012 B1

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5696515 A
- KR 20080043949
- DE 102009053114 A1
- DE 1020090527171 A1